# EUROPEAN PATENT SPECIFICATION

(11) **EP 4 060 188 B1**
(45) Date of publication and mention of the grant of the patent: **11.02.2026**
(21) Application number: 21162862.3
(22) Date of filing: 16.03.2021
(51) Int. Cl.: F03D 13/40

(54) **SYSTEM FOR TRANSPORTING ROTOR BLADES**
SYSTEM ZUM TRANSPORTIEREN VON ROTORBLÄTTERN
SYSTÈME DE TRANSPORT DE PALES DE ROTOR

(43) Date of publication of application: 21.09.2022
(73) Proprietor: Nordex Energy SE & Co. KG, 22419 Hamburg (DE)
(72) Inventor: Jandt, Holger, 18147 Rostock (DE); Wackrow, Torsten, 18119 Rostock (DE)
(74) Representative: Epping - Hermann - Fischer

(56) References cited:
- EP-A1- 1 387 802
- EP-A1- 3 397 519
- EP-B1- 1 387 802
- EP-B1- 3 397 519
- US-A1- 2012 192 420
- US-A1- 2021 025 370

## Description

The disclosure relates to a system for transporting rotor blades, in particular a system that comprises at least one connector.

Wind turbines are used to convert energy from the wind into electrical energy. For this purpose, they have one or more rotor blades (wind turbine rotor blades). Typically, the transport of rotor blades from the production site to the installation site of the wind turbine or wind power plant requires several transport steps. For example, rotor blades are first transported on land by means of a transport vehicle, in particular a truck, then by water by means of a transport ship.

US 2021/0025370 A1 relates to a system for transporting a plurality of wind turbine blades.

There is a need for a concept that contributes to improved transport of wind turbine rotor blades.

The invention is defined by the appended claims and relates to a system with a connector according tc claim 1.

According to an embodiment, a connector for a rotor blade transport frame comprises:
- a base body elongated along a vertical longitudinal direction,
- an upper coupling arrangement on a first side of the base body,
- a lower coupling arrangement on a second side of the base body opposite to the first side along the vertical longitudinal direction, wherein
- the upper coupling arrangement comprises a first coupler for coupling the connector to a first transport frame, and a second coupler for coupling the connector to a second transport frame, such that transverse loads along a transverse direction are transferable between the transport frames, wherein the transverse direction is transverse to the vertical longitudinal direction,
- the upper coupling arrangement comprises an upper mounting for coupling the upper coupling arrangement with a lower coupling arrangement of a second connector along the vertical longitudinal direction, and
- the lower coupling arrangement comprises a lower mounting which is configured to be coupled with an upper mounting of a third connector along the vertical longitudinal direction, such that in a coupled state vertical loads along the longitudinal direction are transferable between the connectors.

The connector allows a mechanical connection between transport frames. The connector realizes an absorption and forwarding of vertical forces and loads beside the transport frames. Thus, block stacks of transport frames and corresponding rotor blades are possible with a large number of stacked frames. There is no need to adapt the transport frames to make them stiffer. The forces and loads that occur when stacking a plurality of transport frames and corresponding rotor blades are absorbed by the connector. For example, the connector, in particular the bottommost connector, is supported on a floor or ground. Thus, loads and forces of transport frames that are arranged at a higher level in the stack can be transferred to the ground via the connectors. The transport frames below the higher arranged transport frame do not need to absorb all the loads and forces of the higher arranged transport frames. In particular, sea transport of rotor blades can be realized more efficiently. The connector, which connects adjacent frames and absorbs vertical forces allows a reduction of needed lashing. Thus, lashing may be realized faster, safer and easier. Transverse cross-lashing may be avoided. The connector allows more rotor blades to be carried per ship and thus contributes to cost savings.

According to further embodiments, the upper mounting for example comprises an opening. The opening is configured to receive the lower mounting of a further connector.

The upper mounting for example comprises a protrusion. The protrusion protrudes along the vertical longitudinal direction. For example, the opening is formed on the protrusion. The protrusion reaches between transport frames arranged above the connector and allows a secure coupling with a connector arranged above. There is no need for the connector to protrude downwards between frames at the second coupling arrangement. For example, an easy and reliable support of the connector at the ground is therefore possible.

According to further embodiments, alternatively or in addition the lower mounting comprises an opening. The opening is configured to receive the upper mounting of a further connector.

The lower mounting for example comprises a protrusion. The protrusion protrudes along the vertical longitudinal direction. For example, the opening of the lower mounting is formed on the protrusion. The protrusion reaches between transport frames arranged below the connector and allows a secure coupling with a connector arranged below.

According to further embodiments, the opening is not formed on a protrusion but formed at a flat part of the base body. The opening for example is provided at a flat part of the upper coupling arrangement and/or a flat part of the lower coupling arrangement.

According to a further embodiment, the lower mounting comprises a bolt. The bolt protrudes along the vertical longitudinal direction. The bolt is configured to be connected with the upper mounting of a further connector. Thus, the bolt and the upper mounting of different connectors allow a reliable connection and stacking of the connectors along the vertical longitudinal axis. This makes the reliable absorption of the vertical forces along the stacked connectors possible.

According to a further embodiment, the bolt and the opening are designed such that the bolt and the opening are connectable in a formfitting manner. The formfitting connection between the bolt and the opening contributes to a secure connection between the connectors even if shearing forces and transverse forces occur during use of the connectors, for example on a transportation ship.

According to a further embodiment, the first coupler, the second coupler and the lower coupling arrangement are connected to the base body such that loads acting on the couplers are transferred to the lower coupling arrangement.

The forces, for example vertical forces, and loads from frames arranged above the connector are introduced into the connector via the first and second couplers. The forces are transferred to the lower coupling arrangement to be transmitted either to a connector arranged below or to the ground.

The system for transporting rotor blades for a wind turbine comprises a plurality of connectors according to an embodiment described herein. Features and advantages described in connection with the connector can therefore be used for the system and vice versa.

The system comprises a plurality of rotor blade transport frames. Two transport frames adjacent along the vertical longitudinal direction are coupleable with each other by at least one connector of the plurality of connectors. The transport frames are coupleable by the at least one connector such that vertical loads along the vertical longitudinal direction are transferrable between the transport frames and the at least one connector. Two transport frames arranged along the transverse direction are coupleable with each other by at least one connector of the plurality of connectors. Thus, transverse forces and shear forces can be transferred between the adjacent frames. This allows a reliable and stable stacking of the transport frames of the system wherein the frames can be prevented from carrying all the vertical loads on their own. The vertical loads are carried by the connectors too.

According to a further embodiment two connectors adjacent along the longitudinal direction are connectable with each other such that vertical loads along the vertical longitudinal direction are transferrable between the two adjacent connectors. This allows a bypass of the vertical forces and loads beside the transport frames.

According to an embodiment the transport frames are stackable along the vertical longitudinal direction with the upper coupling arrangement between two adjacent transport frames. The upper coupling arrangement, in particular one of the first and second couplers, is arranged between the transport frames that are adjacent to each other along the vertical longitudinal direction to induce the forces and loads of the higher transport frame to the lower transport frame and the connector.

A flux of forces along the vertical longitudinal direction from a top transport frame is divided between a lower connector and a lower transport frame in a coupled state of the transport frame and the connectors. For example, 30% or more of the flux of force is introduced into the connector. The remaining flux of force is introduced into the lower transport frame. Thus, the lower transport frame needs to support only parts of the loads and forces of the transport frames arranged above. The remaining loads and forces are supported by the connectors.

According to an embodiment the connector and the transport frame are coupleable such that the connector is movable together with the transport frame by a crane. The coupling between the connector and the transport frame is configured such that the connector is liftable together with the transport frame. This makes a loading of the transport frames and the rotor blades simple because there is no extra loading step for arranging the connectors at the transport ship, for example.

According to an embodiment, at least five transport frames are stackable along the vertical longitudinal direction. Without the connectors, the transport frames are only strong enough that three or four transport frames with corresponding rotor blades are stackable along the vertical longitudinal direction for example. With the aid of the connectors, the same transport frames can be used and more transport frames can be arranged above each other in a reliable manner.

According to a further embodiment at least in a topmost row of the stacked transport frames a gap between two transport frames adjacent along the transverse direction is free of a connector. As there is no need to absorb forces from above, the connectors in the topmost row can be spared. For example, the two topmost rows are arranged without connectors in the gaps between two transport frames adjacent along the transverse direction. This depends on the rotor blades to be carried and, for example, on specifications of the forwarding agency and/or the transport frames used.

According to a further embodiment at least in a bottom row below the topmost row the connector is arranged at an outer side of an outer transport frame. The outermost frames experience the highest vertical forces due to acceleration by sea and wind forces. This means that vertical loads must be removed from the system so that the frames are not overloaded.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

In the figures:
Figure 1 shows a schematic view of a wind turbine according to an embodiment,
Figure 2 shows a schematic view of a system according to an embodiment,
Figure 3 shows a schematic view of a connector according to an embodiment,
Figure 4 shows a schematic view of a transport frame according to an embodiment,
Figure 5 shows a schematic view of details of a system according to an embodiment,
Figure 6 shows a schematic view of details of a system according to an embodiment,
Figure 7 shows a schematic view of details of a system according to an embodiment,
Figure 8 shows a schematic view of details of a system according to an embodiment,
Figure 9 shows a schematic view of details of a system according to an embodiment,
Figures 10 to 14 show schematic views of different stacking possibilities of systems according to embodiments.

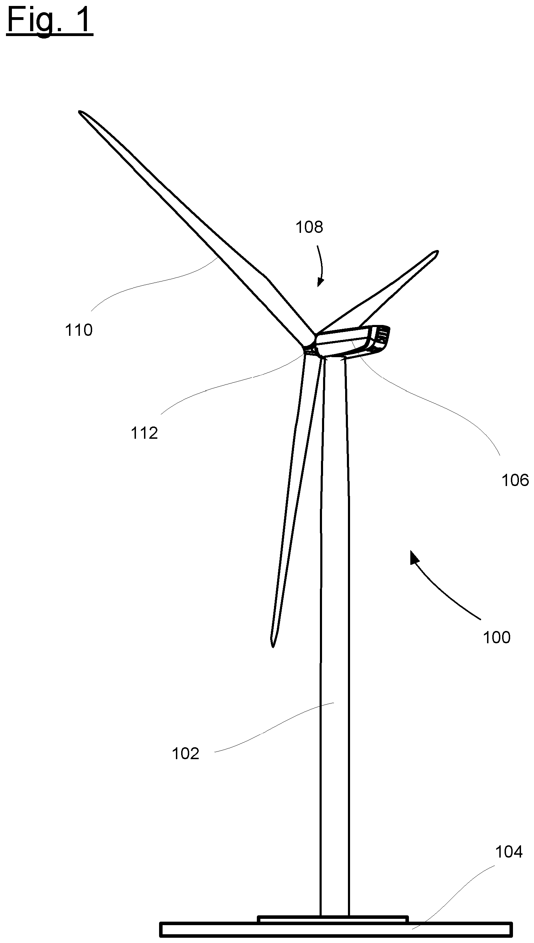

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

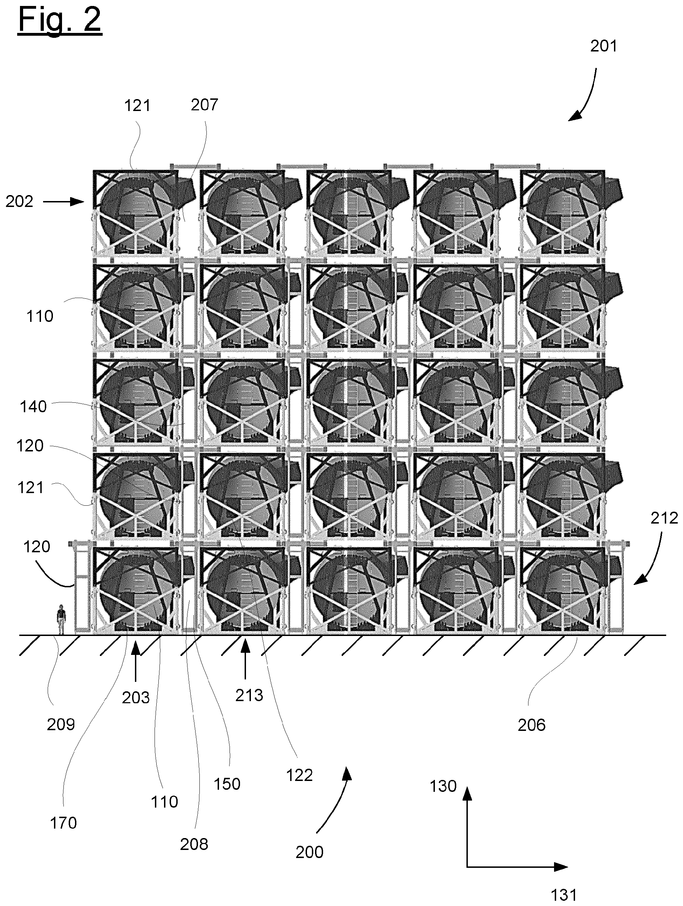

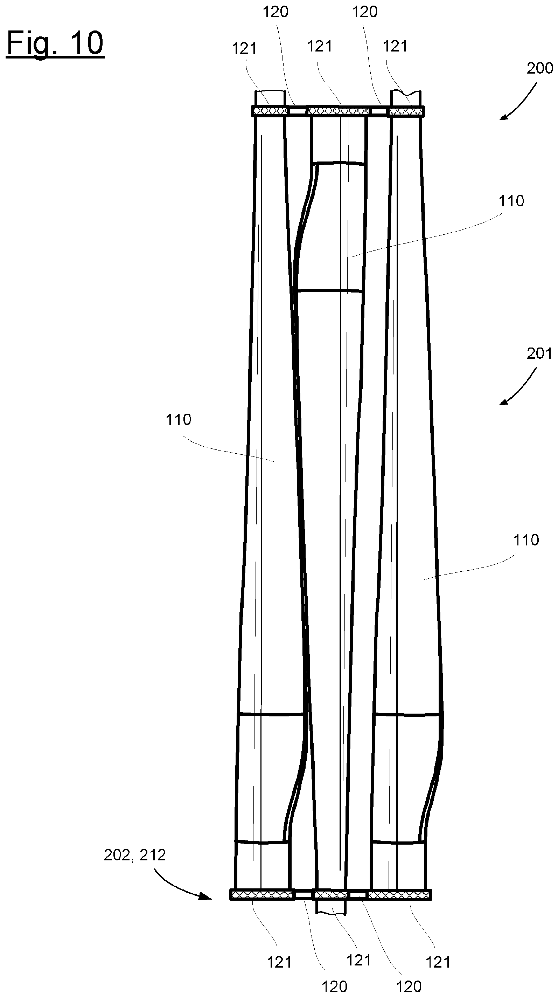

Figure 2 shows a system 200 according to an exemplary embodiment. Figure 2 shows a stack 201 of rotor blades with five rows 202, 212 and five columns 203, 213. Of course, other numbers of columns and rows are possible as, for example, shown in Figures 10 to 14.

The system 200 comprises a plurality of transport frames 121, 122, 170. The transport frames 121, 122, 170 are in particular similar to each other. Therefore, not all reference signs 121, 122, 170 are repeated every time in the description of the drawings and not every transport frame in the figures is marked with a reference sign.

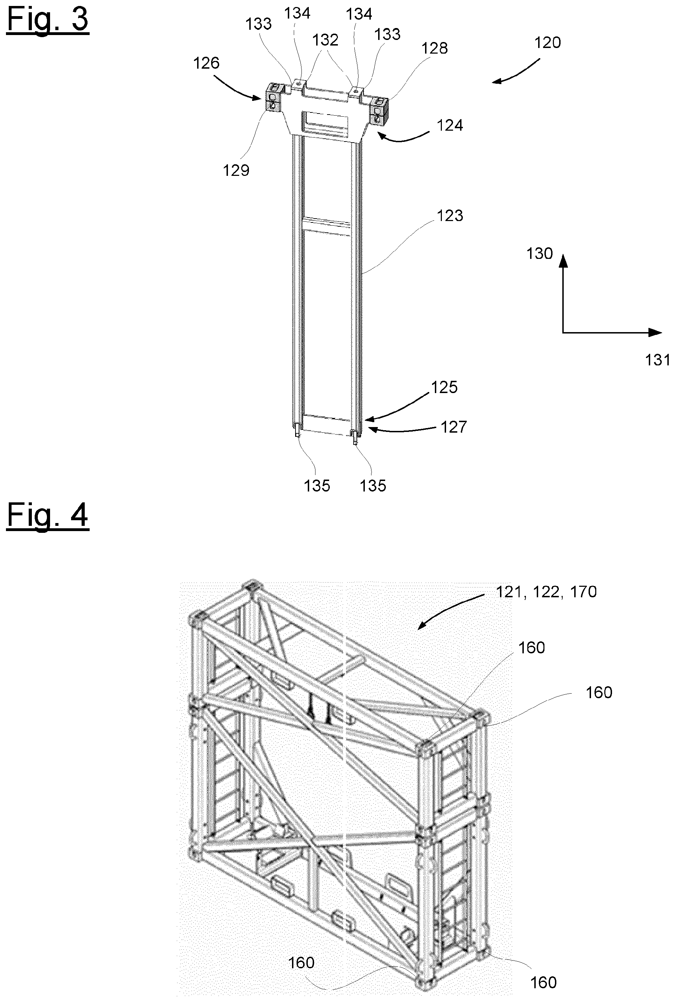

The transport frames are configured to carry the rotor blades 110. For example, each rotor blade 110 is secured by two transport frames 121, one at the root side end of the rotor blade and one in the middle or at a point at the tip side of the rotor blade. The transport frames 121 allow transportation by a truck as well as a stacking to the stack 201, for example on a ship 206. An exemplary embodiment of a transport frame 121 is shown in Figure 4.

The transport frames 121 in each row 202, 212 are arranged beside each other with a gap 207, 208 between two adjacent transport frames 121. In particular in the lower rows 212 a connector 120, 140, 150 is arranged in the gap 208. In particular, the connectors 120, 140, 150 are similar to each other. Therefore, not all reference signs 120, 140, 150 are repeated every time in the description of the drawings and not every connector in the figures is marked with a reference sign. Along the transverse direction 131 the gaps 207, 208 are smaller than the transverse extension of the transport frames 121. For example, a transverse extension of the gaps 207, 208 is about 1 meter, in particular between 0.5 meter and 2 meters.

The connector 120 is connected to the two adjacent transport frames 121. For example, the transport frame 121 and the transport frame 122 are arranged adjacent along a transverse direction 131. The connector 120 is arranged between the transport frames 121 and 122 along the transverse direction 131. Each of the transport frames 121, 122 is connected to the connector 120 such that forces along the transverse direction 131 are transferable between the transport frames 121, 122 and the connector 120 and shear forces are reduced.

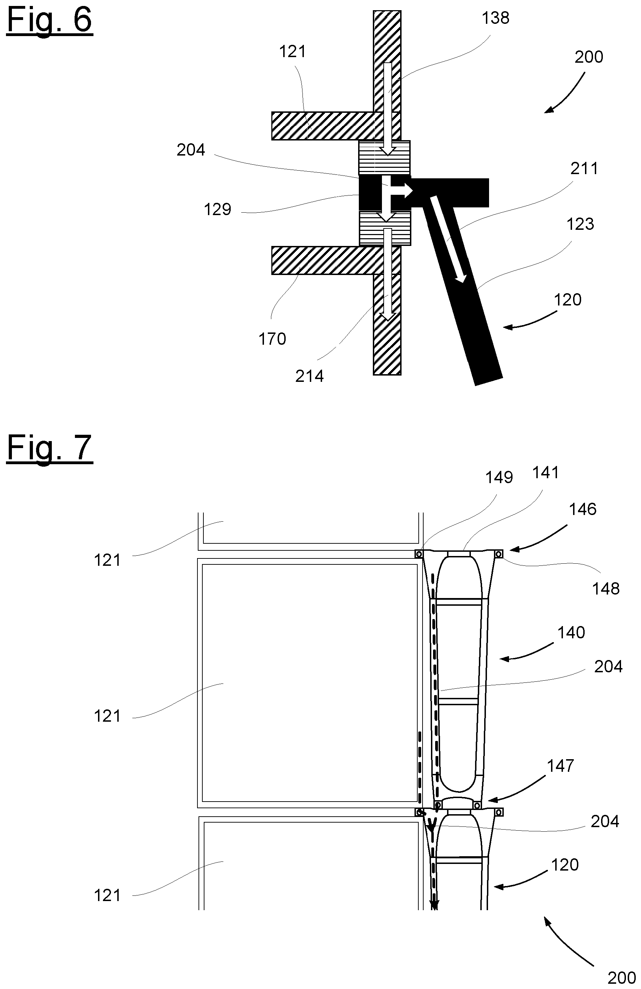

The connector 120 is connected to the second connector 140 which is arranged above the connector 120 along a vertical longitudinal direction 130. A third connector 150, which is arranged below the connector 120, is connected to the connector 120. Comparable to the transport frames 121 the connectors 120, 140, 150 are stacked along the vertical longitudinal direction 130. The connectors 120, 140, 150 are connected such that a vertical force and vertical loads 138 (Figure 6) are transmitted from the higher connectors 140, 150 to the lower connectors 120. The lower connectors 120 are supported on a ground 209 (Figure 6).

The connector 120 and the transport frame 121 are separate components that can be connected to each other and disconnected from each other depending on the desired use. The connector 120 can be reused several times with different transport frames 121.

For example, a connector 120 is not only arranged in the gaps 208 between two adjacent transport frames 121 but also beside the outer transport frame 170 in the bottommost row 212. Depending on a desired stability it is possible to build the stack 201 without the outer connectors 120 or to have more outer connectors 120 not only in the bottommost row 212 but also in rows above the bottommost row 212 and below the topmost row 202.

As shown in Figure 2 in the topmost row 202 there are no connectors 120 in the gaps 207 between the transport frames 121. It is also possible that in the second topmost row there are no connectors 122 in the gaps 207 between the transport frame 121 depending on a desired stability of the stack 201. As the connectors 120 are used for transmitting forces of the transport frames 121 arranged at higher levels to the ground 209 it may be sufficient to have the connectors 120 in the lower rows 212 where a further stabilization of the stack 201 is necessary due to higher loads of the upper rows. The connectors 120 are connected to the adjacent transport frames 121 to absorb parts of the vertical loads 138 and bypass them beside the transport frames 121 arranged below. For example, the third connector 150 is connected to the transport frames 121 and 122. Vertical loads 138 and vertical forces of the transport frames 121, 122 are transferred to the third connector 150. Therefore, for example the transport frame 170 is relieved and has to absorb less weight forces. In addition, the third connector 150 absorbs vertical loads 138 of the connector 120 arranged above which in turn absorbs vertical forces 138 of the transport frames 121 arranged above.

The connectors 120 have a different size and shape than the transport frames 121. The connectors are configured to bypass forces and not to carry directly a rotor blade 110. Along the longitudinal direction 130 the columns with the stacked connectors are free of rotor blades 110. For example, the connectors 120 have a transverse extension along the transverse direction 131 of about 1 meter, in particular between 0.5 meter and 2 meters or between 0.7 meter and 1.5 meter.

Figure 3 shows the connector 120 according to an embodiment. The other connectors of the stack 201 are configured in the same way according to embodiments.

The connector 120 comprises a base body 123 which is elongated along the vertical longitudinal direction 130. The base body 123 is elongated to be as high as the transport frames 121. On a first side 124 of the base body 123 an upper coupling arrangement 126 is arranged. The upper coupling arrangement 126 is configured to be connected to transport frames 121 arranged above and beside the connector 120. The upper coupling arrangement 126 is also configured to be connected to a further connector 120 arranged above the connector 120.

The upper coupling arrangement 126 comprises a first coupler 128 which is configured to be connected to an edge 160 (Figure 4) of the transport frame 121. The upper coupling arrangement 126 comprises a second coupler 129 which is arranged opposite the first coupler 128 along the transverse direction 131. The second coupler 129 is configured to be connected to an edge 160 of the transport frame 121 located on the respective side of the connector 121. The first coupler 128 and the second coupler 129 are configured to absorb transverse loads 139 of transport frames 121 arranged beside the connector 120. The first coupler 128 and the second coupler 129 are also configured to absorb vertical loads 138 of transport frames 121 arranged above the connector 120. The first coupler 128 and the second coupler 129 are configured to transmit forces from the transport frames 121 arranged above to the transport frames 121 arranged below as well as to introduce forces of the transport frames 121 into the connector 120 to bypass forces beside the transport frames 121.

The connector 120 comprises a lower coupling arrangement 127 on a second side 125 opposite the first side 124 along the vertical longitudinal direction 130. The lower coupling arrangement 127 is configured to be coupled with the upper coupling arrangement 126 of another connector 120. The lower coupling arrangement 127 is also configured to be supported on the ground 209. Thus, the same connector 120 can be used either in the bottommost row 212, which is supported on the ground 209, or at higher rows where the connectors 120 and the transport frames 121 are supported on other connectors 120 and transport frames 121.

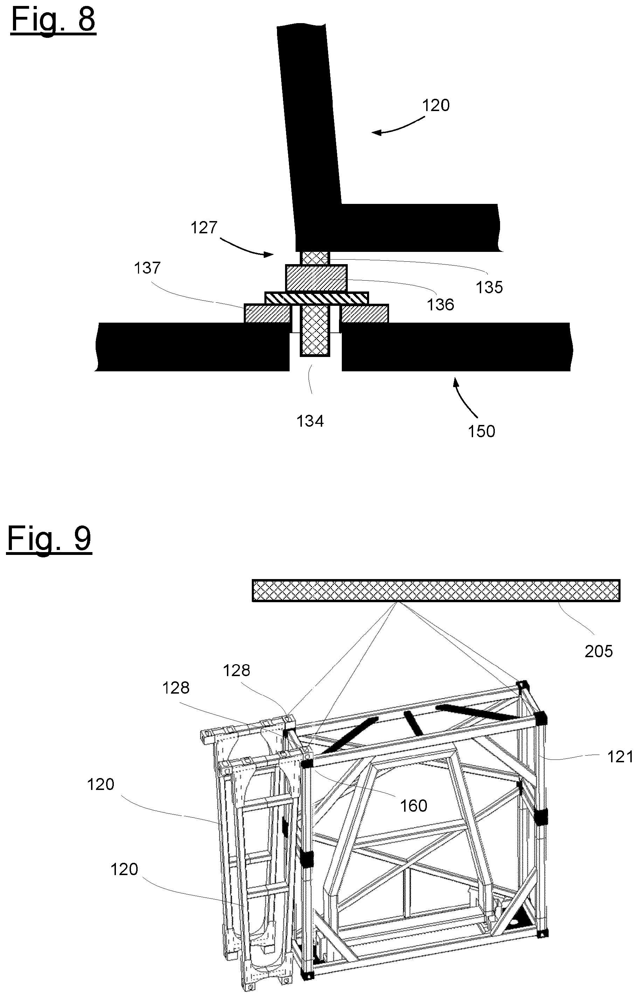

The lower coupling arrangement 127 comprises bolts 135. For example, the bolts 135 are threaded bolts that are screwed into the base body 123. Other forms of protruding elements are possible according to further embodiments. The bolts 135, for example two bolts or more bolts 135, are configured to be connected to an opening 134 of the upper coupling arrangement 126. According to embodiments, the opening 134 is arranged on a protrusion 133. The protrusion may be formed by a support plate 137 (Figure 8) or may be integrally formed with the base body 123 or other elements of the upper coupling arrangement 126. In the shown embodiment of the connector 120 there are two bolts 135 and two corresponding openings 134. The openings 134 which serve for the connection to another connector 120 are part of a mounting 132 of the connector 120. The mounting 132 for connecting two connectors 120 along the vertical longitudinal direction 130 are arranged between the two couplers 128, 129 along the transverse direction 131.

The base body 123 is shown in a rectangular shape. According to further embodiments, the base body 123 comprises a different basic shape, for example a trapezoid shape.

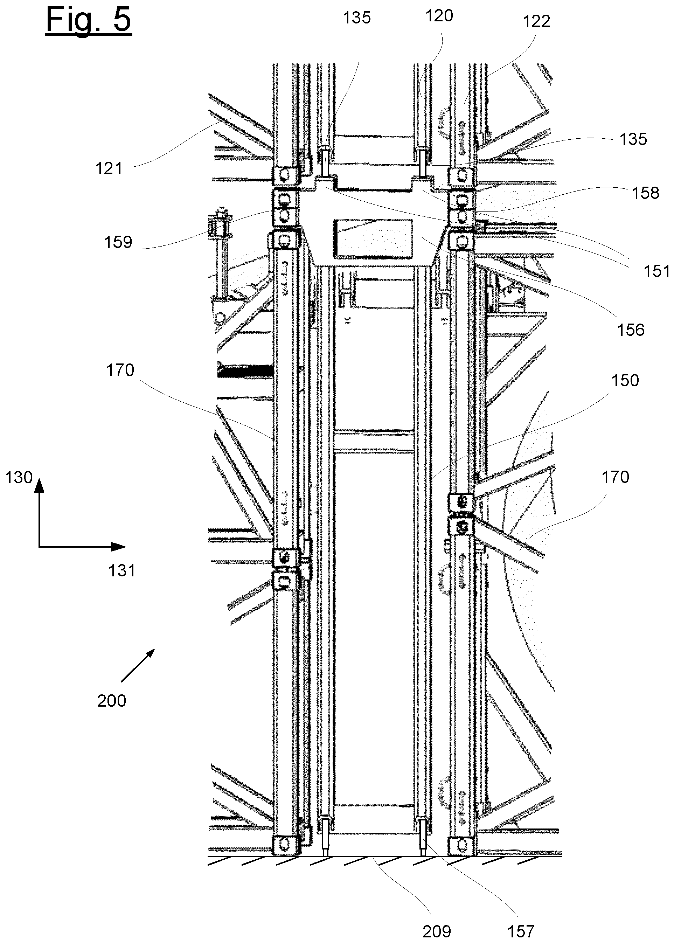

Figure 5 shows the connection between the transport frames 121 and the connectors 120 in detail.

The bottommost connector 150 is supported with its lower coupling arrangement 157 on the ground 209 such that vertical forces can be transmitted to the ground 209.

An upper coupling arrangement 156 of the connector 150 is connected to the transport frames 170 which are arranged beside the connector 150 along the transverse direction 131. First and second couplers 158, 159 of the upper coupling arrangement 156 of the connector 150 are connected at edges 160 of the four adjacent transport frames 121, 122, 170. In particular, the first coupler 158 is arranged between the transport frame 122 and the transport frame 170 to divide the weight forces and other vertical loads 138 of the transport frame 122 between the transport frame 170 and the connector 150. The second coupler 159 of the connector 150 is arranged between the transport frame 121 and the transport frame 170. Vertical loads 133 of two adjacent columns of transport frames 121, 122, 170 are transferred and absorbed by the connector 150.

A mounting 151 of the upper coupling arrangement 156 of the connector 150 is connected to the bolts 135 of the connector 120 arranged above the connector 150. The connector 120 is arranged between the transport frames 121 and 122 along the transverse direction 131. Vertical loads 133 of higher transport frames 121 and connectors 120 are transferred to the connector 150 via the connector 120.

Figure 6 shows an example of the connection of the transport frames 121 and the connector 120 and the schematic flux of force 204.

Vertical loads 138 of the upper transport frame 121 are transferred to the upper coupling arrangement 126, for example, to the second coupler 129. The second coupler 129 is connected to the base body 123 of the connector 120 as well as to the lower transport frame 170. Therefore, the vertical loads 138 and the weight of the parts of the stack 201 arranged above are carried by the lower transport frame 170 and the connector 120 together. The flux of force 204 reaches from the upper transport frame 201 to the second coupler 129 and is divided such that a first part 211 is guided towards the connector 120 and a second part 214 is guided towards the lower transport frame 170. At the second coupler 129 the vertical loads 138 are split into the first part 211 and the second part 214. For example, the first part 211 is between 30 % and 70 % of the total loads and the second part 214 is between 30 % and 70 % of the total loads. Of course, a different distribution between the first part 211 and the second part 214 is possible.

Figure 7 schematically shows the flux of force 204 between the transport frames 121 and the stacked connectors 120 and 140. The loads of the transport frames 121 are introduced in the connectors 120 that are arranged in the rows 202, 212 underneath. The flux of force 204 reaches through the connector 140 to a lower coupling arrangement 147 of the connector 140 which is coupled with the connector 120. The flux of force 204 therefore reaches from the lower coupling arrangement 147 of the connector 140 into the connector 120 where the loads of the connector 140 and of the transport frame 121 arranged above are introduced together. As the connector 140 is configured similar to the connector 120 described above, the connector 140 comprises an upper coupling arrangement 146 for connecting the connector 140 to the transport frames 121. The upper coupling arrangement 146 comprises first and second couplers 148, 149 which are configured for a formfitting connection with edges 160 of the transport frames 121. The upper coupling arrangement 146 of the connector 140 also comprises a mounting 141 which is configured for the connection with a further connector 120.

Figure 8 schematically shows details of the connection between two connectors 120, 150 according to an exemplary embodiment. The upper connector 120 comprises the bolts 135 at the lower coupling arrangement 127. For example, a nut 136 is screwed on the bolt 135. The nut 136 is supported at the support plate 137 of the lower connector 150. By turning the nut 136, a vertical alignment between the two connectors 120,150 is possible. Thus, tolerances can be compensated. The bolt 135 reaches into the opening 134 of the lower connector 150.

Figure 9 schematically shows the lifting of the transport frame 121 together with two connectors 120 by a crane 205. As the connectors 120 are coupled with the edges 160 of the transport frame 121 from above, the connectors 120 can easily and efficiently be lifted together with the transport frame 121, for example to load the transport frame 121 with the rotor blade 110 from a truck to the ship 206. There is no additional mounting step at the ship 206 because the connectors 120 and the transport frame 121 are loaded together and can be stacked together at the stack 201.

Figures 10 to 14 show different arrangements of the stack 201. Further arrangements that are not explicitly shown in the figures are also possible. Figure 10 shows a stack 201 in which adjacent rotor blades 110 are twisted with respect to each other. Different sized transport frames 121 are connected with the root end respectively tip end of the rotor blades and are connected with each other by the connectors 120 along the rows 202, 212.

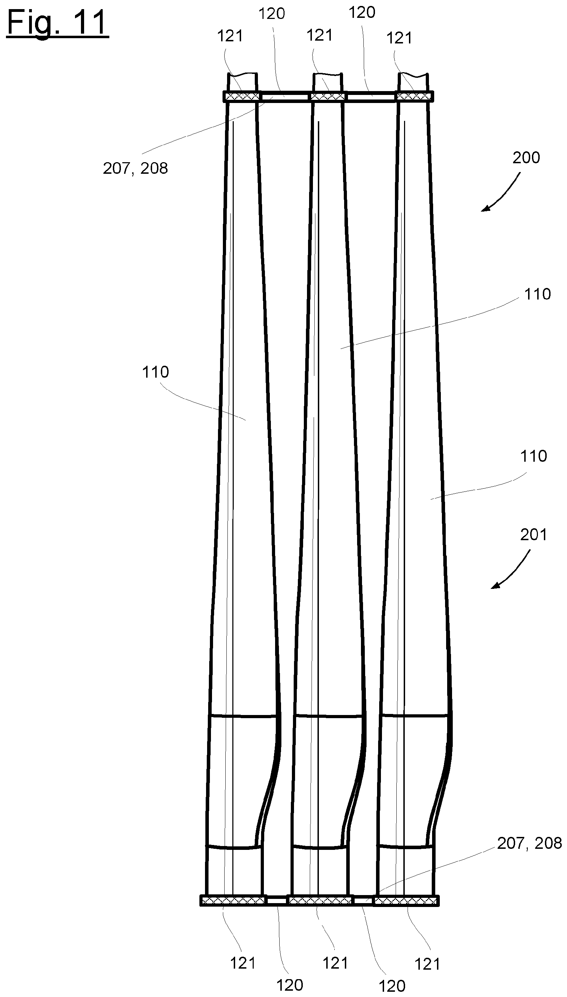

Figure 11 shows the stack 201 in which the rotor blades 110 are aligned uniformly. Different sizes of connectors 120 are used. At the root of the rotor blades 110 bigger transport frames 121 are used and therefore narrower connectors 120 are necessary because the gap 207, 208 between the transport frames 121 is smaller. At the middle parts or nearer the tips of the rotor blades 10 narrower transport frames 121 are used. The gaps 207, 208 between the transport frames 121 are therefore bigger and thus broader connectors 120 are used.

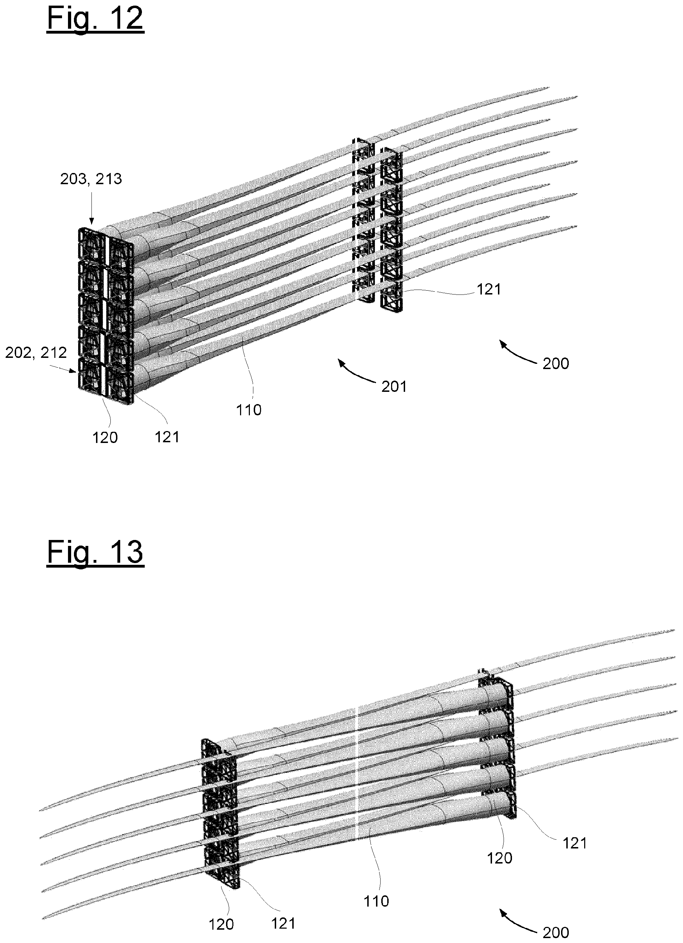

Figure 12 shows the stack 201 with five rows 202, 212 and two columns 203, 230. The rotor blades 110 are arranged uniformly. Of course, more columns 203, 213 are possible. Depending on the transport frame 201, more than five rows 202, 212 are possible.

Figure 13 shows the stack 201 with the rotor blades 210 adjacent along the transverse direction 131 arranged to be twisted to each other. Transport frames 121 which are connected to the root of the rotor blades 110 are connected to transport frames 121 which are connected to a middle part or tip of the rotor blades 110 along the transverse direction 131 by connectors 120.

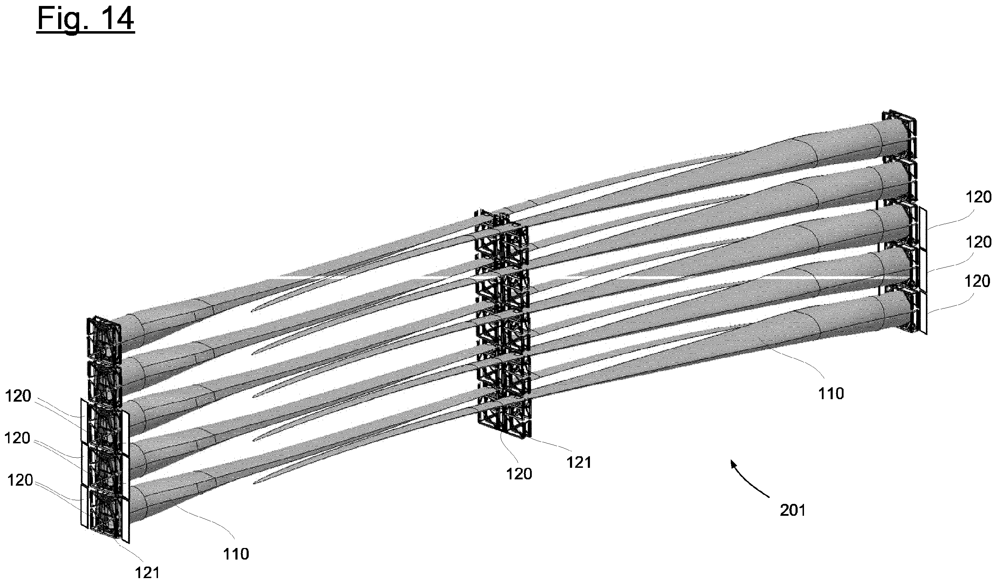

Figure 14 shows the stack 201 in which transport frames 121 are connected with each other by connectors 120 at the middle part or tip of the rotor blades 110 along the transverse direction 131. At the root of the rotor blades 110 the connectors 120 are connected along the longitudinal direction 130 to transmit forces of the higher rotor blades 110 and corresponding transport frames 121 beside the lower transport frames 121 to the ground 209.

The system 200 allows a stack 201 with, for example, five rotor blades 110 arranged side by side and on top of each other. Different orientations of the rotor blades 110 with respect to each other are possible. High forces and loads according to the stacking of at least five rotor blades 110 above each other are absorbed by the connectors 120. For example two transport frames 121 adjacent along the transverse direction 131 are spaced about 1 m apart. The coupling between the connector 120 and the transport frame 121 is realized by a twist lock, for example. For additional stabilization of the stack 201 an additional bracing may be necessary such as an additional lashing. The connectors 120 realize a high shear stiffness of the stack 201 such that according to embodiments no lashing in the transverse direction 131 may be necessary.

The connectors 120 reach between two layers of transport frames 121 and pick up most of the vertical loads 138 from the top layer and transfer them to the ground 209 or the connector 120 below. The high vertical stiffness of the connectors 120 allows vertical forces to be collected and introduced into the connectors 120 and finally the forces are transferred and transmitted to the ground 209. Thus, the lower transport frames 121 are relieved and released from vertical loads 138. Thus, no special transport frames 121 are needed for the lower rows 202, 212. When stacked on top of each other there is a form-fit between the connectors 120 so that the vertical flux of force 204 can occur. The connectors 120 are designed in different versions and heights according to embodiments. It is also possible to have a telescopic height adjustment at the connectors 120 to use the same connector 120 for different rotor blades 110.

The system 200 allows an efficient transportation of a plurality of rotor blades 110. Lashing of the transport frames 121 may be avoided or is at least faster, safer and easier. Cross-lashing may no longer be necessary. A high number of layers or rows 202, 212 can be achieved, in particular five rows 202, 212 with transport frames 121 that would, for example, otherwise only realize four layers or rows 202, 212 without the connector 120. The transport frames 121 do not need to be modified as the loads 238, 239 are at least partially absorbed by the connectors 120. A high tightness of the stack 201 is achievable. More rotor blades 110 can be carried per transport at the ship 206 than without the system 200.

### Reference Signs

100 wind turbine
102 tower
104 foundation
106 nacelle
108 rotor
110 rotor blade
112 rotor hub
120 connector
121, 122, 170 transport frame
123 base body
124 first side of the base body
125 second side of the base body
126 upper coupling arrangement
127 lower coupling arrangement
128 first coupler
129 second coupler
130 vertical longitudinal direction
131 transverse direction
132 mounting
133 protrusion
134 opening
135 bolt
136 nut
137 support plate
138 vertical loads
139 transverse loads
140 second connector
141 mounting
146 upper coupling arrangement
147 lower coupling arrangement
148 first coupler
149 second coupler
150 third connector
151 mounting
156 upper coupling arrangement
157 lower coupling arrangement
158 first coupler
159 second coupler
160 edge
170 transport frame
200 system for transporting rotor blades
201 stack
202 row
203 column
204 flux of force
205 crane
206 ship
207, 208 gap
209 ground
211 first part (of the flux of force)
212 row
213 column
214 second part (of the flux of force)

## Claims

1. System (200) for transporting rotor blades (110) for a wind turbine (100), comprising,
- a plurality of connectors (120, 140, 150) for a rotor blade transport frame (121, 122, 170), wherein each of the connectors (120, 140, 150) comprises:
- a base body (123) elongated along a vertical longitudinal direction (130),
- an upper coupling arrangement (126, 146, 156) on a first side (124) of the base body (123),
- a lower coupling arrangement (127, 147, 157) on a second side (125) of the base body (123) opposite to the first side (124) along the vertical longitudinal direction (130), wherein
- the upper coupling arrangement (126, 146, 156) comprises a first coupler (128) for coupling the connector (120, 140, 150) to a first transport frame (121, 122, 170), and a second coupler (129) for coupling the connector (120, 140, 175) to a second transport frame (121, 122, 170), such that transverse loads (139) along a transverse direction (131) are transferable between the transport frames (121, 122, 170), wherein the transverse direction (131) is transverse to the vertical longitudinal direction (130),
- the upper coupling arrangement (126, 146, 156) comprises an upper mounting (132, 141, 151) for coupling the upper coupling arrangement (126, 146, 156) with a lower coupling arrangement (127, 147, 157) of a second connector (120, 140, 150) along the vertical longitudinal direction (130), and
- the lower coupling arrangement (127, 147, 157) comprises an lower mounting (135) which is configured to be coupled with an upper mounting (132, 141, 151) of a third connector (120, 140, 150) along the vertical longitudinal direction (131), such that in a coupled state vertical loads (138) along the vertical longitudinal direction (130) are transferable between the connectors (120, 140, 150),
- a plurality of rotor blade transport frames (121, 122, 170),
- wherein two transport frames (121, 122, 170) adjacent along the vertical longitudinal direction are coupleable with each other by at least one connector (120, 140, 150) of the plurality of connectors (120, 140, 150), such that at least a part of the vertical loads (138) along the longitudinal direction (130) is transferable from the transport frames (121, 122, 170) to the at least one connector (120, 140, 150), and
- wherein two transport frames (121, 122, 170) adjacent along the transverse direction (131) are coupleable with each other by at least one connector (120, 140, 150) of the plurality of connectors (120, 140, 150), **characterized in that** a flux of force (204) along the longitudinal direction (130) from a top transport frame (121, 122, 170), which reaches through the upper coupling arrangement (146) of the connector (140) to a lower connector (120, 140, 150), is divided between the lower connector (120, 140, 150) and a lower transport frame (121, 122, 170) in a coupled state of the transport frames (121, 122, 170) and the connectors (120, 140, 150).

2. System according to claim 1, wherein two connectors (120, 140, 150) adjacent along the longitudinal direction (130) are connectable with each other such that vertical loads (138) along the longitudinal direction (130) are transferable between the two adjacent connectors (120, 140, 150).

3. System according to claims 1 or 2, wherein the transport frames (121, 122, 170) are stackable along the longitudinal direction (130) with the upper coupling arrangement (126, 146, 156) between two adjacent transport frames (121, 122, 170).

4. System according to any of claims 1 to 3, wherein the connector (120, 140, 150) and the transport frame (121, 122, 170) are coupleable such that the connector (120, 140, 150) is movable together with the transport frame (121, 122, 170) by a crane (205).

5. System according to any of claims 1 to 4, wherein at least five transport frames (121, 122, 170) are stackable along the longitudinal direction (130).

6. System according to any of claims 1 to 5, wherein in a coupled state at least in a topmost row (202, 212) along the longitudinal direction (130) a gap (207, 208) between two transport frames (121, 122, 170) adjacent along the transverse direction (131) is free of a connector (120, 140, 150) and at least in a bottom row (202, 212) below the topmost row (202, 212) the connector (120, 140, 150) is arranged in a gap (207, 208) between two transport frames (121, 122, 170) adjacent along the transverse direction (131), wherein the connector (120, 140, 150) takes at least a part of the vertical load (138) from the topmost row (202, 212).

7. System according to any of claims 1 to 6, wherein in a coupled state in a bottom row (202, 212) below the topmost row (202, 212) the connector (120, 140, 150) is arranged at an outer side of an outer transport frame (121, 122, 170).

8. System according to any of claims 1 to 7, where the transport frames (121, 122, 170) and the connectors (120, 140, 150) are configured to be mounted on a transport ship (206), such that rotor blades (110) mounted to the transport frame (121, 122, 170) are transportable by means of the transport ship (206).

9. System according to any of claims 1 to 8, wherein the upper mounting (132, 141, 151) comprises an opening (134) for receiving the lower mounting (135) of the lower coupling arrangement (127, 147, 157) of a further connector and/or wherein the lower mounting (135) comprises an opening for receiving the upper mounting (132, 141, 151) of the upper coupling arrangement (126, 146, 156) of a further connector.

10. System according to any of claims 1 to 9, wherein the lower mounting (135) comprises a bolt (135) which protrudes along the vertical longitudinal direction (130) and which is configured to be connected with the upper mounting (132, 141, 151) of a further connector.

11. System according to any of claims 1 to 10, wherein the bolt (135) and the opening (134) are designed such that the bolt (135) and the opening (134) are connectable in a formfitting manner.

12. System according to any of claims 1 to 11, wherein the first coupler (128), the second coupler (129) and the lower coupling arrangement (127, 147, 157) are connected to the base body (123) such that loads acting on the couplers (128, 129) are transferred to the lower coupling arrangement (127, 147, 157).

13. System according to any of claims 1 to 12, wherein the flux of force (204) that enters the lower connector (120, 140, 150) is transmitted to the ground (209) by the bottommost connector (120, 140, 150).

14. System according to any of claims 1 to 13, wherein the lower connector (120, 140, 150) is supported on the ground (209).

## Patentansprüche

1. System (200) zum Transportieren von Rotorblättern (110) für eine Windkraftanlage (100), aufweisend
- eine Vielzahl von Verbindern (120, 140, 150) für einen Rotorblatt-Transportrahmen (121, 122, 170), wobei jeder der Verbinder (120, 140, 150) aufweist:
- einen Grundkörper (123), der entlang einer vertikalen Längsrichtung (130) langgestreckt ist,
- eine obere Kopplungsanordnung (126, 146, 156) auf einer ersten Seite (124) des Grundkörpers (123),
- eine untere Kopplungsanordnung (127, 147, 157) auf einer zweiten Seite (125) des Grundkörpers (123), die entlang der vertikalen Längsrichtung (130) entgegengesetzt zur ersten Seite (124) ist,
wobei
- die obere Kopplungsanordnung (126, 146, 156) ein erstes Kopplungsteil (128), um den Verbinder (120, 140, 150) mit einem ersten Transportrahmen (121, 122, 170) zu koppeln, und ein zweites Kopplungsteil (129) aufweist, um den Verbinder (120, 140, 175) mit einem zweiten Transportrahmen (121, 122, 170) zu koppeln, so dass Querlasten (139) zwischen den Transportrahmen (121, 122, 170) entlang einer Querrichtung (131) übertragbar sind, wobei die Querrichtung (131) quer zur vertikalen Längsrichtung (130) verläuft,
- die obere Kopplungsanordnung (126, 146, 156) eine obere Halterung (132, 141, 151) aufweist, um die obere Kopplungsanordnung (126, 146, 156) entlang der vertikalen Längsrichtung (130) mit einer unteren Kopplungsanordnung (127, 147, 157) eines zweiten Verbinders (120, 140, 150) zu koppeln, und
- die untere Kopplungsanordnung (127, 147, 157) eine untere Halterung (135) aufweist, die dafür ausgelegt ist, entlang der vertikalen Längsrichtung (130) mit einer oberen Halterung (132, 141, 151) eines dritten Verbinders (120, 140, 150) gekoppelt zu werden, so dass in einem gekoppelten Zustand vertikale Lasten (138) zwischen den Verbindern (120, 140, 150) entlang der vertikalen Längsrichtung (130) übertragbar sind,
- eine Vielzahl von Rotorblatt-Transportrahmen (121, 122, 170),
- wobei zwei Transportrahmen (121, 122, 170), die entlang der vertikalen Längsrichtung benachbart sind, durch mindestens einen Verbinder (120, 140, 150) aus der Vielzahl von Verbindern (120, 140, 150) miteinander so koppelbar sind, dass mindestens ein Teil der vertikalen Lasten (138) entlang der Längsrichtung (130) von den Transportrahmen (121, 122, 170) auf den mindestens einen Verbinder (120, 140, 150) übertragbar ist, und
- wobei zwei Transportrahmen (121, 122, 170), die entlang der Querrichtung (131) benachbart sind, durch mindestens einen Verbinder (120, 140, 150) aus der Vielzahl von Verbindern (120, 140, 150) miteinander koppelbar sind, **dadurch gekennzeichnet, dass** ein Kraftfluss (204) entlang der Längsrichtung (130) von einem oberen Transportrahmen (121, 122, 170), der durch die obere Kopplungsanordnung (146) des Verbinders (140) zu einem unteren Verbinder (120, 140, 150) gelangt, in einem gekoppelten Zustand der Transportrahmen (121, 122, 170) und der Verbinder (120, 140, 150) zwischen dem unteren Verbinder (120, 140, 150) und einem unteren Transportrahmen (121, 122, 170) aufgeteilt wird.

2. System nach Anspruch 1, wobei zwei Verbinder (120, 140, 150), die entlang der Längsrichtung (130) benachbart sind, miteinander so verbindbar sind, dass vertikale Lasten (138) zwischen den zwei benachbarten Verbindern (120, 140, 150) entlang der Längsrichtung (130) übertragbar sind.

3. System nach Anspruch 1 oder 2, wobei die Transportrahmen (121, 122, 170) entlang der Längsrichtung (130) mit der oberen Kopplungsanordnung (126, 146, 156) zwischen zwei benachbarten Transportrahmen (121, 122, 170) stapelbar sind.

4. System nach einem der Ansprüche 1 bis 3, wobei der Verbinder (120, 140, 150) und der Transportrahmen (121, 122, 170) koppelbar sind, so dass der Verbinder (120, 140, 150) zusammen mit dem Transportrahmen (121, 122, 170) durch einen Kran (205) bewegbar ist.

5. System nach einem der Ansprüche 1 bis 4, wobei mindestens fünf Transportrahmen (121, 122, 170) entlang der Längsrichtung (130) stapelbar sind.

6. System nach einem der Ansprüche 1 bis 5, wobei in einem gekoppelten Zustand, zumindest in einer obersten Lage (202, 212) entlang der Längsrichtung (130), ein Spalt (207, 208) zwischen zwei entlang der Querrichtung (131) benachbarten Transportrahmen (121, 122, 170) frei von Verbindern (120, 140, 150) ist, und zumindest in einer unteren Lage (202, 212) unterhalb der obersten Lage (202, 212) der Verbinder (120, 140, 150) in einem Spalt (207, 208) zwischen zwei entlang der Querrichtung (131) benachbarten Transportrahmen (121, 122, 170) angeordnet ist, wobei der Verbinder (120, 140, 150) zumindest einen Teil der vertikalen Last (138) von der obersten Lage (202, 212) aufnimmt.

7. System nach einem der Ansprüche 1 bis 6, wobei in einem gekoppelten Zustand in einer unteren Lage (202, 212) unterhalb der obersten Lage (202, 212) der Verbinder (120, 140, 150) an einer Außenseite eines äußeren Transportrahmens (121, 122, 170) angeordnet ist.

8. System nach einem der Ansprüche 1 bis 7, wobei die Transportrahmen (121, 122, 170) und die Verbinder (120, 140, 150) dafür ausgelegt sind, auf einem Transportschiff (206) montiert zu werden, so dass Rotorblätter (110), die an den Transportrahmen (121, 122, 170) angebracht sind, mittels des Transportschiffs (206) transportfähig sind.

9. System nach einem der Ansprüche 1 bis 8, wobei die obere Halterung (132, 141, 151) eine Öffnung (134) aufweist, um die untere Halterung (135) der unteren Kopplungsanordnung (127, 147, l57) eines weiteren Verbinders aufzunehmen, und/oder wobei die untere Halterung (135) eine Öffnung aufweist, um die obere Halterung (132, 141, 151) der oberen Kopplungsanordnung (126, 146, 156) eines weiteren Verbinders aufzunehmen.

10. System nach einem der Ansprüche 1 bis 9, wobei die untere Halterung (135) eine Schraube (135) aufweist, die entlang der vertikalen Längsrichtung (130) vorsteht und dafür ausgelegt ist, mit der oberen Halterung (132, 141, 151) eines weiteren Verbinders verbunden zu werden.

11. System nach einem der Ansprüche 1 bis 10, wobei die Schraube (135) und die Öffnung (134) so konzipiert sind, dass die Schraube (135) und die Öffnung (134) formschlüssig verbindbar sind.

12. System nach einem der Ansprüche 1 bis 11, wobei das erste Kopplungsteil (128), das zweite Kopplungsteil (129) und die untere Kopplungsanordnung (127, 147, 157) mit dem Grundkörper (123) so verbunden sind, dass Lasten, die auf die Kopplungsteile (128, 129) wirken, auf die untere Kopplungsanordnung (127, 147, 157) übertragen werden.

13. System nach einem der Ansprüche 1 bis 12, wobei der Kraftfluss (204), der in den unteren Verbinder (120, 140, 150) eintritt, durch den untersten Verbinder (120, 140, 150) auf den Boden (209) übertragen wird.

14. System nach einem der Ansprüche 1 bis 13, wobei der untere Verbinder (120, 140, 150) vom Boden (209) getragen wird.

## Revendications

1. Système (200) destiné à transporter des pales de rotor (110) pour une éolienne (100), comprenant
- une pluralité de connecteurs (120, 140, 150) pour un cadre de transport de pales de rotor (121, 122, 170), chacun des connecteurs (120, 140, 150) comprenant :
- un corps de base (123) allongé dans une direction longitudinale verticale (130),
- un dispositif de couplage supérieur (126, 146, 156) sur un premier côté (124) du corps de base (123),
- un dispositif de couplage inférieur (127, 147, 157) sur un deuxième côté (125) du corps de base (123), qui est opposé au premier côté (124) le long de la direction longitudinale verticale (130),
sachant que
- le dispositif de couplage supérieur (126, 146, 156) comportant une première partie de couplage (128) pour coupler le connecteur (120, 140, 150) à un premier cadre de transport (121, 122, 170), et une deuxième partie de couplage (129) pour coupler le connecteur (120, 140, 175) à un deuxième cadre de transport (121, 122, 170) de manière à ce que des charges transversales (139) puissent être transmises entre les cadres de transport (121, 122, 170) le long d'une direction transversale (131), la direction transversale (131) s'étendant transversalement à la direction longitudinale verticale (130),
- le dispositif de couplage supérieur (126, 146, 156) comprend un support supérieur (132, 141, 151) pour coupler le dispositif de couplage supérieur (126, 146, 156) le long de la direction longitudinale verticale (130) à un dispositif de couplage inférieur (127, 147, 157) d'un deuxième connecteur (120, 140, 150), et
- le dispositif de couplage inférieur (127, 147, 157) comprend un support inférieur (135) conçu pour être couplé le long de la direction longitudinale verticale (130) à un support supérieur (132, 141, 151) d'un troisième connecteur (120, 140, 150) de manière à ce que, dans un état couplé, des charges verticales (138) entre les connecteurs (120, 140, 150) puissent être transmises le long de la direction longitudinale verticale (130),
- une pluralité de cadres de transport de pales de rotor (121, 122, 170),
- deux cadres de transport (121, 122, 170) adjacents le long de la direction longitudinale verticale pouvant être couplés l'un à l'autre par au moins un connecteur (120, 140, 150) parmi la pluralité de connecteurs (120, 140, 150) de manière à ce qu'au moins une partie des charges verticales (138) le long de la direction longitudinale (130) puisse être transférée des cadres de transport (121, 122, 170) vers ledit au moins un connecteur (120, 140, 150), et
- deux cadres de transport (121, 122, 170) adjacents le long de la direction transversale (131) pouvant être couplés l'un à l'autre par au moins un connecteur (120, 140, 150) parmi la pluralité de connecteurs (120, 140, 150), **caractérisé en ce qu'**un flux de force (204) le long de la direction longitudinale (130) d'un cadre de transport supérieur (121, 122, 170) passant par le dispositif de couplage supérieur (146) du connecteur (140) vers un connecteur inférieur (120, 140, 150), est réparti entre le connecteur inférieur (120, 140, 150) et un cadre de transport inférieur (121, 122, 170) dans un état couplé entre les cadres de transport (121, 122, 170) et les connecteurs (120, 140, 150).

2. Le système selon la revendication 1, sachant que deux connecteurs (120, 140, 150) adjacents le long de la direction longitudinale (130) peuvent être reliés entre eux de telle sorte que les charges verticales (138) entre les deux connecteurs adjacents (120, 140, 150) puissent être transmises le long de la direction longitudinale (130).

3. Le système selon la revendication 1 ou 2, sachant que les cadres de transport (121, 122, 170) peuvent être empilés le long de la direction longitudinale (130) avec le dispositif de couplage supérieur (126, 146, 156) entre deux cadres de transport adjacents (121, 122, 170).

4. Le système selon l'une des revendications 1 à 3, sachant que le connecteur (120, 140, 150) et le cadre de transport (121, 122, 170) peuvent être couplés afin que le connecteur (120, 140, 150) puisse être déplacé avec le cadre de transport (121, 122, 170) à l'aide d'une grue (205).

5. Le système selon l'une des revendications 1 à 4, sachant qu'au moins cinq cadres de transport (121, 122, 170) peuvent être empilés le long du sens longitudinal (130).

6. Le système selon l'une des revendications 1 à 5, sachant que, à l'état couplé, au moins dans une couche supérieure (202, 212) le long de la direction longitudinale (130), un espace (207, 208) est prévu entre deux cadres de transport (121, 122, 170) adjacents le long de la direction transversale (131) est exempt de connecteurs (120, 140, 150), et sachant que, au moins dans une couche inférieure (202, 212) située en dessous de la couche supérieure (202, 212), les connecteurs (120, 140, 150) sont disposé dans un interstice (207, 208) entre deux cadres de transport (121, 122, 170) adjacents le long de la direction transversale (131), le connecteur (120, 140, 150) absorbant au moins une partie de la charge verticale (138) de la couche supérieure (202, 212).

7. Le système selon l'une des revendications 1 à 6, sachant que, dans un état couplé, dans une couche inférieure (202, 212) située sous la couche supérieure (202, 212), le connecteur (120, 140, 150) est disposé sur un côté extérieur d'un cadre de transport extérieur (121, 122, 170).

8. Le système selon l'une des revendications 1 à 7, sachant que les cadres de transport (121, 122, 170) et les connecteurs (120, 140, 150) sont conçus pour être montés sur un navire de transport (206) de telle sorte que les pales de rotor (110) fixées aux cadres de transport (121, 122, 170) puissent être transportées au moyen du navire de transport (206).

9. Le système selon l'une des revendications 1 à 8, sachant que le support supérieur (132, 141, 151) comprend une ouverture (134) pour recevoir le support inférieur (135) du dispositif de couplage inférieur (127, 147, l57) d'un autre connecteur, et/ou sachant que le support inférieur (135) présente une ouverture pour recevoir le support supérieur (132, 141, 151) du dispositif de couplage supérieur (126, 146, 156) d'un autre connecteur.

10. Le système selon l'une des revendications 1 à 9, sachant que le support inférieur (135) comprend une vis (135) faisant saillie le long de la direction longitudinale verticale (130) et conçue pour être reliée au support supérieur (132, 141, 151) d'un autre connecteur.

11. Le système selon l'une des revendications 1 à 10, sachant que la vis (135) et l'ouverture (134) sont conçues de telle sorte que la vis (135) et l'ouverture (134) puissent être reliées par complémentarité de forme.

12. Le système selon l'une des revendications 1 à 11, sachant que la première partie de couplage (128), la deuxième partie de couplage (129) et le dispositif de couplage inférieur (127, 147, 157) sont reliés au corps de base (123) de telle sorte que des charges agissant sur les parties de couplage (128, 129) soient transmises au dispositif de couplage inférieur (127, 147, 157).

13. Le système selon l'une des revendications 1 à 12, sachant que le flux de force (204) entrant dans le connecteur inférieur (120, 140, 150) est transféré au sol (209) par le connecteur le plus bas (120, 140, 150).

14. Le système selon l'une des revendications 1 à 13, sachant que le connecteur inférieur (120, 140, 150) est supporté par le sol (209).
